# EUROPEAN PATENT APPLICATION

(11) **EP 2 645 700 A1**
(43) Date of publication of application: **02.10.2013**
(21) Application number: 12161603.1
(22) Date of filing: 27.03.2012
(51) Int. Cl.: H04N 5/232

(54) **Method and device for motion enhanced image capture**

(71) Applicant: BlackBerry Limited, Waterloo ON N2L 3W8 (CA)
(72) Inventor: Keane, James Abraham, Rolling Meadows, IL 60008 (US); Lee, Yun Sun, Rolling Meadows, IL 60008 (US)
(74) Representative: Patel, Binesh

(57) **Abstract**

The present disclosure provides motion enhanced image capture methods and devices. In particular it provides a method for motion enhanced image capture on a portable electronic device, the method comprising:storing an image captured by an image sensor of the portable electronic device in a buffer memory; sensing motion of the portable electronic device; selecting an image for capture using the image sensor in response to input; selecting a new image from the image buffer when the sensed motion is greater than a threshold level of motion.

## Description

### TECHNICAL FIELD

The present disclosure relates to digital cameras, and more particularly to a method and device for motion enhanced image capture.

### BACKGROUND

Digital cameras, including digital cameras built into smartphones and other multipurpose portable electronic devices, are sometimes provided with motion sensors. The motion sensors can be used to adjust for motion detected during image capture to reduce motion blur. While somewhat effective, motion blur and other imaging problems persist in digital cameras. Accordingly, there remains a need for improved image capture methods and devices.

### BRIEF DESCRIPTION OF THE DRAWINGS

Figure 1 is a block diagram illustrating a portable electronic device suitable for carrying out example embodiments of the present disclosure.

Figure 2 is a block diagram illustrating an image capture assembly of the portable electronic device of Figure 1.

Figure 3 is a flowchart of a method for motion enhanced image capture in accordance with one example embodiment of the present disclosure.

Figure 4 is a flowchart of a method for motion enhanced image capture in accordance with another example embodiment of the present disclosure.

Figure 5 is a flowchart of a method for motion enhanced image capture in accordance with a further example embodiment of the present disclosure.

Figure 6 is a flowchart of a method for motion enhanced image capture in accordance with a further example embodiment of the present disclosure.

Figure 7 is a flowchart of a method for motion enhanced image capture in accordance with a further example embodiment of the present disclosure.

Figures 8A to 8E are screen shots of example user interfaces comprising a visual indication of a path for composite image composition in accordance with the method of Figure 7.

### DETAILED DESCRIPTION

Reference will now be made to the accompanying drawings which show example embodiments of the present disclosure. For simplicity and clarity of illustration, reference numerals may be repeated among the Figures to indicate corresponding or analogous elements. Numerous details are set forth to provide an understanding of the example embodiments described herein. The example embodiments may be practised without some of these details. In other instances, well-known methods, procedures, and components have not been described in detail to avoid obscuring the example embodiments described. The description is not to be considered as limited to the scope of the example embodiments described herein.

Any reference to direction or orientation stated herein is for convenience and is not intended to be limiting unless explicitly stated herein. Any directional references in relation to the graphical user interface (GUI) are relative to the screen orientation of the GUI rather than a fixed point or reference on the host electronic device. The term "user interface" is sometimes used herein to refer to the GUI for convenience. For the purpose of the present disclosure, the terms device orientation and device position are treated equivalently.

The present disclosure provides motion enhanced image capture methods and devices. The teachings of the present disclosure use sensed motion to adjust for non-motion related imaging problems, such as low light conditions and imaging stitching image alignment, to improve image capture and post-capture image processing.

In accordance with one example embodiment, there is provided a method for motion enhanced image capture on a portable electronic device, the method comprising: storing an image captured by an image sensor of the portable electronic device in a buffer memory; sensing motion of the portable electronic device; selecting an image for capture using the image sensor in response to input; selecting a new image from the image buffer when the sensed motion is greater than a threshold level of motion.

In accordance with another example embodiment, there is provided a method for motion enhanced image capture on a portable electronic device, the method comprising: sensing motion of the portable electronic device; capturing an image using an image sensor of the portable electronic when the sensed motion is less than a threshold level of motion; storing the captured image in persistent memory.

In accordance with a further example embodiment, there is provided a method for motion enhanced image capture on a portable electronic device, the method comprising: capturing an image captured by an image sensor of the portable electronic device; sensing motion of the portable electronic device; providing a warning that the image is likely blurry when the sensed motion is greater than a threshold level of motion.

In accordance with yet a further example embodiment, there is provided a method of composing an image on a portable electronic device, the method comprising: capturing an initial image; displaying on a display of the portable electronic device a visual indication of a path for movement of the portable electronic device to complete a composite image based on the initial image; changing the visual indication in response to at least one of sensed motion and changes in the orientation of the portable electronic device; capturing additional images at set device orientations along the path.

In some examples, the method of composing an image on a portable electronic device further comprises combining the captured images to form a composite image. In some examples, the path represents a plurality of orientations of the portable electronic device at which additional images are captured for later combination to form the composite image. In some examples, the plurality of orientations of the path correspond to a plurality of movements of the portable electronic device, wherein the movements includes any combination of tilt left, tilt up, tilt down and tilt right. In some examples, the visual indication comprises a reticule and a target, wherein changes in the orientation of the portable electronic device cause a position of the reticule to move relative to the target. In some examples, the reticule has a fixed position relative to a display and the target has a fixed position relative to a real-time preview image captured by the image sensor and displayed on the display. In some examples, the reticule changes in appearance when the position of the reticule matches a position of the target. In some examples, the reticule and target overlay the real-time preview image.

In accordance with yet a further example embodiment, there is provided an electronic device, comprising: a processor; a motion sensor coupled to the processor; and an image sensor coupled to the processor; wherein the processor is configured for performing the method(s) set forth herein.

In accordance with yet a further embodiment of the present disclosure, there is provided a computer program product comprising a computer readable medium having stored thereon computer program instructions for implementing a method on an electronic device, the computer executable instructions comprising instructions for performing the method(s) set forth herein.

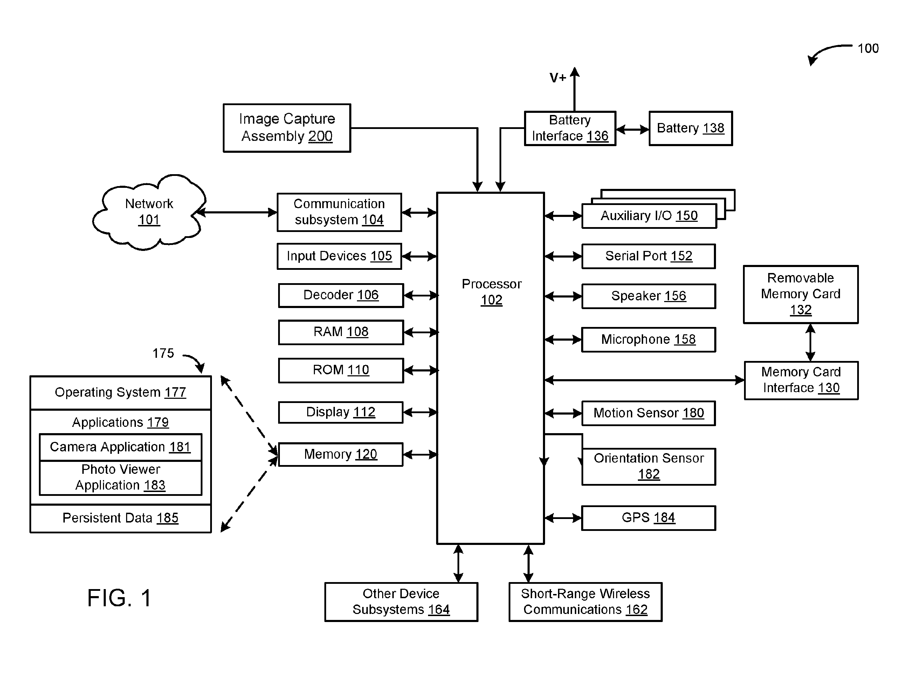

Reference is first made to Figure 1 which illustrates a portable electronic device 100 (referred to hereinafter as merely electronic device 100 for convenience) in which example embodiments described in the present disclosure can be applied. The electronic device 100 described below has wireless communication capabilities; however, it is contemplated that the teachings of the present disclosure may be applied to devices without wireless communication capabilities. Examples of the electronic device 100 include, but are not limited to, a mobile phone, smartphone or superphone, tablet computer, notebook computer (also known as a laptop, netbook or ultrabook computer depending on the device capabilities), wireless organizer, personal digital assistant (PDA), electronic gaming device, and special purpose digital camera (which may be capable of both still image and video image capture).

The electronic device 100 includes a rigid case (not shown) housing the electronic components of the electronic device 100. The electronic components of the electronic device 100 are mounted on a printed circuit board (not shown). The electronic device 100 includes a controller comprising at least one processor 102 (such as a microprocessor) which controls the overall operation of the electronic device 100. Communication functions, including data and voice communications, are performed through a communication subsystem 104. Data received by the electronic device 100 may be decompressed and decrypted by a decoder 106. The communication subsystem 104 receives messages from and sends messages to a wireless network 101. The wireless network 101 may be any suitable type of wireless network.

The processor 102 interacts with other components, such as one or more input devices 105, Random Access Memory (RAM) 108, Read Only Memory (ROM) 110, a display 112 such as a colour liquid crystal display (LCD), persistent (non-volatile) memory 120 which may be flash erasable programmable read only memory (EPROM) memory ("flash memory") or any other suitable form of memory, an image capture assembly 200, a motion sensor 180 which enables to processor 102 to determine whether the electronic device 100 is in motion and the nature of any sensed motion at any appropriate time, e.g., when an image is captured, an orientation sensor 182 which enables the processor 102 to determine which direction the electronic device 100 is pointed at any appropriate time, e.g., when an image is captured, global positioning system (GPS) device 184 which enables the processor 102 to determine GPS coordinates (i.e., location) of the electronic device 100 at any appropriate time, e.g., when an image is captured, auxiliary input/output (I/O) subsystems 150, data port 152 such as serial data port (e.g., Universal Serial Bus (USB) data port), speaker 156, microphone 158, short-range communication subsystem 162, and other device subsystems generally designated as 164. The components of the electronic device 100 are coupled via a communications bus (not shown) which provides a communication path between the various components.

The display 112 typically includes a display area in which information may be displayed and a non-display area extending around the periphery of the display area. Information is not displayed in the non-display area. The non-display area may be utilized to accommodate, for example, electronic traces or electrical connections, adhesives or other sealants, and/or protective coatings around the edges of the display area.

The display 112 may be provided as part of a touch-sensitive display which provides an input device 105. The display 112 which together with a touch-sensitive overlay (not shown) operably coupled to an electronic controller (not shown) comprise the touch-sensitive display. The touch-sensitive display is typically a capacitive touch-sensitive display which includes a capacitive touch-sensitive overlay may be any other suitable touch-sensitive display, such as a resistive, infrared, surface acoustic wave (SAW) touch-sensitive display, strain gauge, optical imaging, dispersive signal technology, acoustic pulse recognition, and so forth, as known in the art. The overlay of the touch-sensitive display may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

User-interaction with the GUI is performed through the input devices 105. Information, such as text, characters, symbols, images, icons, and other items are rendered and displayed on the display 112 via the processor 102. The processor 102 may interact with the orientation sensor to detect direction of gravitational forces or gravity-induced reaction forces so as to determine, for example, the orientation of the electronic device 100 in order to determine a screen orientation for the GUI.

The input devices 105 may include a keyboard, control buttons such as a power toggle (on/off) button (not shown), a camera button (not shown) for enabling a camera mode, a capture button (not shown) for enabling an image capture sequence when in the camera mode, one or more zoom buttons (not shown) for enabling a selection of a zoom setting when in the camera mode, and a navigation device (not shown) for navigating through stored data, such as digital images, menu choices and the like which are displayed on the display 112. When the display 112 is provided as part of a touch-sensitive display, the capture button, zoom button and other camera controls may be provided by onscreen user interface elements displayed on the display 112 instead of, or in addition to, physical interface components. The keyboard may be provided instead of, or in addition to, a touch-sensitive display depending on the embodiment. At least some of the control buttons may be multi-purpose buttons rather than special purpose or dedicated buttons.

The electronic device 100 also includes a memory card interface 130 for receiving a removable memory card 132 comprising persistent memory, such as flash memory. A removable memory card 132 can be inserted in or coupled to the memory card interface 130 for storing and reading data by the processor 102 including, but not limited to still images and optionally video images captured the image capture assembly 200. Other types of user data may also be stored on the removable memory card 132. Other types of removable digital image storage media, such as magnetic hard drives, magnetic tape, or optical disks, may be used in addition to, or instead of, the removable memory card 132.

The processor 102 operates under stored program control and executes software modules 175 stored in memory, for example, in the persistent memory 120. As illustrated in Figure 1, the software modules 175 comprise operating system software 177 and software applications 179. The software applications 179 include a camera application 181 and photo viewer application 183. The camera application 181 contains the logic for operating the image capture assembly 200 and capturing still images and optionally video images from the image capture assembly 200 and storing the still images and video images in the persistent memory 120. The photo viewer application 183 contains logic for displaying data (i.e., still images and optionally video images) from the persistent memory 120 and data from the image capture assembly 200 on the display 112. Persistent data 185, such as user data, can also be stored in the persistent memory 120. The persistent data 185 may include digital media files stored in the electronic device 100 such as still images and/or video images captured the image capture assembly 200, or other still images and/or video images transferred, downloaded or otherwise stored on the persistent memory 120.

The software modules 175 or parts thereof may be temporarily loaded into volatile memory such as the RAM 108. The RAM 108 is used for storing runtime data variables and other types of data or information. Although specific functions are described for various types of memory, this is merely one example, and a different assignment of functions to types of memory could also be used.

Still images and optionally video images captured the image capture assembly 200 are stored in persistent memory after. The persistent memory may be one or any combination of the internal persistent memory 120, the removable memory card 132 or remote persistent storage. The remote persistent storage may be a cloud based resource, such as a remote content server, accessible by the wireless network 101 or possibly via a wireline (e.g., via the data port 152) or short-range wireless connection (e.g., via the short-range communication subsystem 162) to a host computer having wireline access to the cloud based resource. The location at which captured still images and optionally video images is stored is typically a configurable setting which may be set by a user either in advance or at the time of capture.

The camera application 181 and/or photo viewer application 183 can access the remote persistent storage and optionally cloud based applications through the wireless network 101 or possibly via a wireline or short-range wireless connection to a host computer having wireline access to the cloud based resource. The use of cloud based or other remote persistent storage allows access to still images and optionally video images captured the image capture assembly 200 from nearly any computer or portable electronic device having access to the Internet.

The electronic device 100 also includes a battery 138 as a power source, which is typically one or more rechargeable batteries that may be charged, for example, through charging circuitry coupled to a battery interface such as the serial data port 152. The battery 138 provides electrical power to at least some of the electrical circuitry in the electronic device 100, and the battery interface 136 provides a mechanical and electrical connection for the battery 138. The battery interface 136 is coupled to a regulator (not shown) which provides power V+ to the circuitry of the electronic device 100.

A received signal, such as a text message, an e-mail message, or web page download, is processed by the communication subsystem 104 and input to the processor 102. The processor 102 processes the received signal for output to the display 112 and/or to the auxiliary I/O subsystem 150. A subscriber may generate data items, for example e-mail messages, which may be transmitted over the wireless network 101 through the communication subsystem 104, for example.

The motion sensor 180 may comprise an accelerometer (such as a three-axis accelerometer) or other suitable motion sensor. The orientation sensor 182 may comprise an accelerometer (such as a three-axis accelerometer), electronic compass, gyroscope, or a combination thereof. Other suitable orientation sensors could be used instead of, or in addition to, the accelerometer, electronic compass and gyroscope. The motion sensor 180 and orientation sensor 182, or parts thereof, may be combined or shared, for example, within an integrated component. The processor 102, or controller (not shown) of a three-axis accelerometer, can convert acceleration measurements into device orientations.

The electronic device 100 may connect to a host personal computer (not shown) via the serial data port 152 or short-range communication subsystem 162 communicating over a suitable interconnection, such as a USB connection, Firewire^{™} connection, Bluetooth^{™} connection or the like.

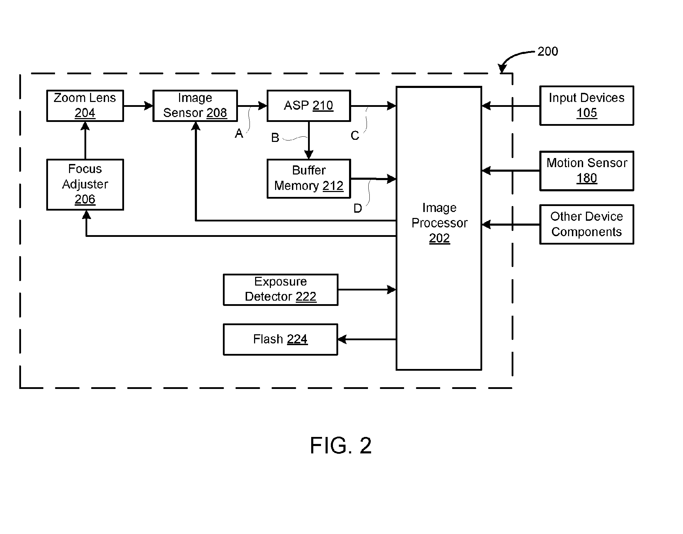

Referring now to Figure 2, the image capture assembly 200 of the electronic device 100 will be described in more detail. The image capture assembly 200 includes an image processor 202 which performs various image processing functions described below. The image processor 202 is typically a programmable image processor but could be, for example, a hard-wired custom integrated circuit (IC) processor, a general purpose microprocessor, or a combination of hard-wired custom IC and programmable processors. When the image capture assembly 200 is part of a multipurpose portable electronic device such as a mobile phone, smartphone or superphone, at least some of the functions of the image capture assembly 200 may be performed by the main processor 102 of the host electronic device 100. It is contemplated that all of the functions performed by the image processor 202 could be performed by the main processor 102, in which case the image processor 202 can be omitted. Furthermore, the image capture assembly 200 has access to various components of the host electronic device 100, and can receive inputs from and send outputs to various components of the host electronic device 100, input such as the input devices 105, motion sensor 180, orientation sensor 182, GPS 184, RAM 108, persistent memory 120 and the like.

The image capture assembly 200 also includes a zoom lens 204 which is controlled by a focus adjuster 206, such as zoom and focus motors, which adjust the focal length and focus distance of the zoom lens 204. The zoom lens 204 has a variable aperture the size of which is expressed by an f-number (sometimes called focal ratio, f-ratio, f-stop, or relative aperture) which is a measure of the diameter of the aperture of the zoom lens 204. The f-number is the focal length divided by the "effective" aperture diameter. The f-number is a dimensionless number that is a quantitative measure of lens "speed".

The zoom lens 204 provides an image to an image sensor 208. The image sensor 208 may have a number of aspect ratios, such as a 4:3 and 16:9 image aspect ratios, and a number of image resolutions. In some embodiments, the image sensor 208 is a charge-coupled device (CCD) sensor; however, a complementary metal-oxide semiconductor (CMOS) sensor or other suitable image sensor could be used. An adjustable aperture and shutter assembly (not shown) in the zoom lens 204 is used to control the aperture size and the exposure time of the image sensor 208. In other embodiments, the zoom lens 204 could be replaced with a fixed focal length lens (also known as a "prime" lens) in which case the focus adjuster 206 merely adjusts the focus distance of the lens. Digital zoom may be provided by digital image processing performed by the image processor 202 of the image capture assembly 200 or processor 102 (rather than optical zoom provided by the zoom lens 204). In other embodiments, the shutter assembly could be omitted in favour of an electronic shutter.

The image processor 202 controls the image sensor 208 by supplying various control signals to the image sensor 208. The image processor 202 also controls the focus adjuster 206, an exposure detector 222 which determines the amount of available light, and a flash 224 for emitting light to illuminate a scene being captured by the focus lens 204. The input devices 105 provide user controls which can control the operation of the image capture assembly 200. The image processor 202 can use the input from the exposure detector 222 to determine the exposure time required to capture an image based on the amount of available light and other settings. The image processor 202 can active the flash 224 to increase the amount of available light, for example, in response to the input from the exposure detector 222.

An analog captured image signal A output from the image sensor 208 is amplified and converted to a digital captured image signal by an analog signal processor (ASP) 210. The ASP 210 includes an analog-to-digital (A/D) converter among other functional components. A digital captured image signal B output by the ASP 210 is temporarily stored in a buffer memory 212, such as a Dynamic random-access memory (DRAM) buffer memory.

The image processor 202 produces focus signals which drive the focus adjuster 206 (e.g., zoom and focus motors) to adjust the focus of an image providing the image sensor output for the captured image signal, typically in response to the activation of the capture button. The image processor 202 produces focus signals which drive the focus adjuster 206 (e.g., zoom and focus motors) to adjust the focus of an image providing the image sensor output for the captured image signal in response to the activation of the capture button. A passive autofocus system is typically provided by the electronic device 100. In the passive autofocus system, a digital captured image signal C output by the ASP 210 is provided to the image processor 102 which performs autofocus calculations on the digital captured image signal C. Focus signals are sent to the focus adapter 206 to adjust the focus distance of the zoom lens 204 as necessary as a result of the output the autofocus calculations. The autofocus calculations are typically performed using either contrast detection or phase detection methods which rely on moving the zoom lens 204 to make minor adjustments in the focus distance until a maximal (or optimal) contrast is obtained. The autofocus calculations assume that maximal (or optimal) contrast corresponds to maximal sharpness. The nature of the autofocus calculations is outside the scope of the present disclosure and will not be described in further detail herein. Autofocus methods and calculations suitable for use by the image processor 202 are well known in the art and will be readily known to the skilled person.

The image processor 202 may continuously produce focus signals thereby providing continuous autofocus when the image capture assembly 200 is in an active or ready-to-capture state (rather than an inactive state such as when displaying a full screen menu) such that the images being stored to the buffer memory 212 are focused images rather than performing autofocus operations in response to the activation of the capture button as mentioned previously.

In other embodiments, an active autofocus system could be used instead of the passive autofocus system described above. The active autofocus system may include an infrared (IR) emitter and IR sensor which determines a distance from the IR emitter to an object at the focus point using the time for reflected IR waves to return to the IR sensor and/or the intensity of the reflected IR waves. The focus adjuster 206 moves the zoom lens 204 in accordance with the determined distance.

The digital captured image signal C may also be output to the display 112 to provide a preview image. The digital captured image signal C may be used to provide a real-time or "live" preview in which a real-time image (or an approximation of an image) of the image captured with the image sensor 208 is displayed on the display 112 as a thumbnail image (e.g., reduced size/resolution version) of the captured image for graphical processing efficiency, or alternatively a dedicated electronic viewfinder device.

A digital captured image signal D provided by the buffer memory 212 is subsequently processed by the image processor 202 to produce a processed digital image file, which may contain a still digital image or a video image. The buffer memory 212 may also be used to eliminate shutter lag in what is sometimes referred to as a "zero" shutter lag mode. A sequence of images acquired from the digital captured image signal B of the ASP 210 is stored by the ASP 210 in the buffer memory 212 by the ASP 210 in a chronological order of a time at which the images were captured. The images are typically stored in association with a date and/or time at which the images were captured to assist subsequent retrieval and/or processing, e.g. for accessing and retrieval of images based on the chronological order. When in a zero shutter lag mode, images are continuously sampled and stored to the buffer memory 212 up to a set limit. The limit of the buffer memory 212 is typically a number of images, e.g., 1, 2, 3, 4, 5, 10, 25 or other suitable number which depends on a frame rate the image sensor 208 (the number of frames per second (fps)) captured by the image sensor 208) and other factors. The limit of the buffer memory 212 could be another suitable limit such as a total size of the image or a duration of capture (e.g., all images take in the last n number of seconds). The limit of the buffer memory 212 may be configurable in some embodiments. The limit is set so that the captured images stored in the buffer memory 212 are generally contemporaneous with the real-time preview image. Accordingly, the limit of the buffer memory 212 depends largely on the frame rate

Alternatively, rather than storing a sequence of images acquired from the digital captured image signal B of the ASP 210 in the buffer memory 212, a sequence of processed images in the formed of processed digital image files could be stored by the image processor 202 in the buffer memory 212.

The zero shutter lag mode differs from a continuous capture mode in that the images are only temporarily stored in the buffer memory 212 and that the sampling is continuous rather than being dependent on the activation of the capture button. In the zero shutter lag mode, the capture button cannot be activated as the capture button is the trigger for changing the storage of the captured images from temporary storage in the buffer memory 212 to persistent storage in the memory 120 or removeable memory card 132.

The real-time image displayed on the display 112 is synchronized with the images stored in the buffer memory 212 such that, when the capture button is activated, the image in the buffer memory 212 which corresponds to the real-time image displayed on the display 112 when the capture button was activated is selected from the buffer memory 212 for further processing by the image processor 202, and is stored in persistent memory such as the persistent memory 120 or the removeable memory card 132. In this manner, the image displayed to the user corresponds to the image captured by the image capture assembly 200, thereby providing no shutter lag.

The image processor 202 may perform various other image processing functions, including colour interpolation and colour and tone correction to produce rendered image data, such as standard Red Green Blue (sRGB) image data. The rendered image data is then stored in the memory of the removeable memory card 132 or persistent memory 120. In some embodiments, the rendered image data may be compressed before storing, for example, the rendered image data may be JPEG compressed and stored as a JPEG image file, which may be in the Exchangeable image file (Exif) format or other suitable format which preferable supports image metadata, such as one or more of a date/time the image was captured, f-number of the zoom lens 204 at which the image was captured, GPS location and pointing direction when the image was captured and possibly other camera settings.

The processing performed by the image processor 202 is typically controlled by firmware stored in a firmware memory (not shown), which may be flash memory or any other suitable form of memory. The image processor 202 processes the digital input image from the buffer memory 212, using RAM memory (such as RAM 108 of the host electronic device or possibly separate, dedicated RAM) to store intermediate results during processing.

While the components of the electronic device 100 are shown as separate blocks in Figures 1 and 2, the functions of various components may be combined in actual processing elements, circuits and the like. Furthermore, some of the functional blocks of Figures 1 and 2 may be separated into one or more sub blocks when implemented in actual processing elements, circuits and the like.

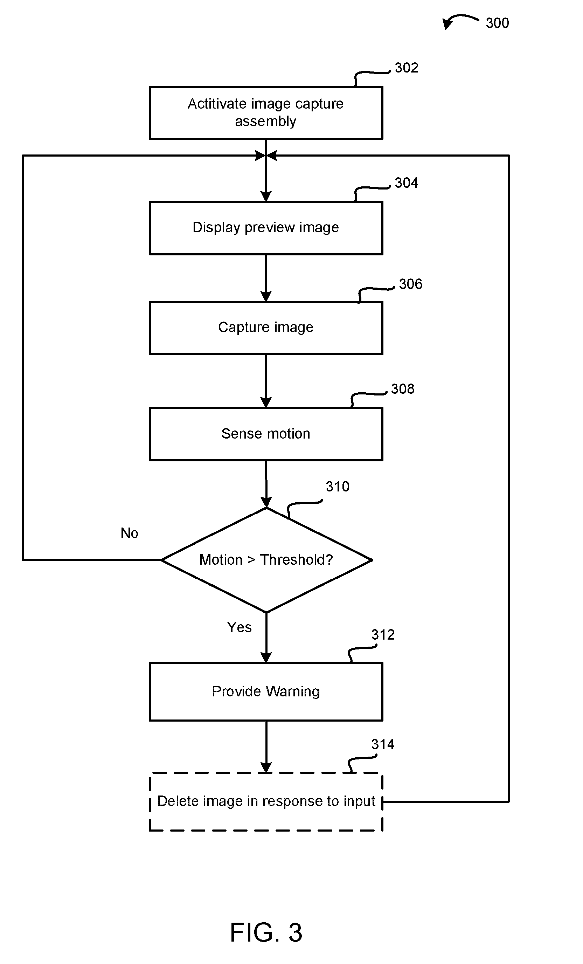

Figure 3 is a flowchart of a method 300 for motion enhanced image capture in accordance with one example embodiment of the present disclosure. The method 300 may be carried out, at least in part, by firmware or software such as the camera application 181, executed by the processor 102 and/or image processor 202. Coding of software for carrying out such a method 300 is within the scope of a person of ordinary skill in the art provided the present disclosure. The method 300 may contain additional or fewer processes than shown and/or described, and may be performed in a different order. Computer-readable code executable by at least one processor 102 and/or image processor 202 to perform the method 300 may be stored in a computer-readable medium such as the persistent memory 120.

At 302, the image capture assembly 200 is activated, for example, by engaging a camera mode of the electronic device 100. The camera mode can be activated by a camera button or a corresponding menu option displayed on the display 112. The zoom lens 204 is set to a default position which is typically a wide angle position.

At 304, the image sensor 208 captures images which are output to the display 112 to provide an image preview mode which enables the user to compose the images to be captured based on a real-time preview image. As part of the composing, the user may activate zoom buttons to set a desired field of view. The digital captured image signal C provides captured images for preview on the display 112 and provides captured images for the image processor 202 to perform autofocus calculations.

At 306, the capture button is activated and the image currently being displayed in the real-time preview image is selected for "permanent" capture and storage in persistent memory.

At 308, the motion sensor 180 senses motion of the electronic device 100 and stores the motion data temporarily in memory, for example, in RAM 108. The electronic device 100, via the processor 102 and/or image processor 202, analyzes the sensed motion, the current f-number of the zoom lens 204 and optionally the exposure time based on the amount of available light provided by the exposure detector 222. While shown as a separate functional step, the motion sensor 180 senses motion during the image capture of 306.

At 310, the electronic device 100, via the processor 102 and/or image processor 202, determines whether the sensed motion is greater than a threshold level of motion. The threshold level of motion may be configurable in some embodiments. As part of the determining, the sensed motion, the current f-number of the zoom lens 205 and optionally the exposure time based on the amount of available light provided by the exposure detector 222 are analyzed.

In at least some embodiments, as part of the determining the electronic device 100 determines whether the captured image is predicted to have a level of motion blur which is greater than a threshold level of motion blur based on the sensed motion (e.g., a magnitude or amount of the sensed motion) when the image was captured, the f-number of the zoom lens 204 when the image was captured, and optionally the exposure time based on the amount of available light provided by the exposure detector 222 when the image was captured. The threshold level of motion blur may be configurable in some embodiments.

The motion blur analysis may be performed using one of several different approaches. In some embodiments, the data associated with the captured image may be compared to motion blur data (e.g., in the form of a relational table) relating the sensed motion, the f-number and optionally the exposure to an indication of whether the motion blur is acceptable. The indication of whether the motion blur is acceptable may be based on a previous determination performed on previously captured images at the same amount of sensed motion, f-number and optionally the exposure. The indication of whether the motion blur is acceptable may be qualitative indication (e.g., yes/no, blurry/not blurry or the like) or a quantitative indication in the form of a numerical value or range of values measuring the level of motion blur. The motion blur data may include different sets of data, each set of data including values corresponding to a different threshold level of motion blur for use when the threshold level of motion blur is configurable. The motion blur data may be pre-loaded by the manufacturer of the electronic device 100 so that the method 300 may be performed on a first use of the electronic device 100. An equation or motion sensitivity curve may be provided to simplify the analysis even further. The comparison of current data to pre-stored motion blur data (either in the form of raw data or an equation or motion sensitivity curve) increases computational efficiency compared with a real-time calculation of the level of motion blur in a captured image and is expected to provide acceptable levels of predictability and reliability. Alternatively, in other embodiments a real-time calculation of the level of motion blur could be performed.

It will be appreciated that the amount of motion which may be tolerated without severely impacting image quality, e.g. in the form of excessive motion blur, varies depending on the aperture size (f-number) and exposure time. Accordingly, analysing the current f-number and/or exposure time provides a more comprehensive image analysis. This more comprehensive image analysis permits the capture of images with an acceptable level of motion blur which may not be captured if the amount of sensed motion is the sole base of consideration as higher levels of sensed motion may be acceptable in some lighting conditions and exposure settings but not others. Accordingly, an aspect of the present disclosure is the recognition that an analysis which is limited to sensed motion may hinder the performance of motion assisted image capture in some conditions. The present disclosure describes motion enhanced image capture techniques which seek to address this and other shortcomings.

At 312, a warning is provided when it is determined that the sensed motion is greater than the threshold level of motion. In at least some embodiments, the warning is provided when it is determined that the captured image is predicted to have a level of motion blur which is greater than the threshold level of motion blur. The warning is typically a visual notification displayed on the display 112, for example, an icon or other pictorial representation which overlays (e.g., is superimposed upon) a post-capture preview image displayed on the display 112 as a thumbnail image (e.g., reduced size/resolution version) of the captured image for graphical processing efficiency. Alternatively, the visual notification may be a message which overlays the preview image displayed on the display 112. Alternatively, the warning may be an audible notification such as a tone, beep or pre-recorded message which is reproduced using the speaker 156, or a physical notification such as a vibration caused by a vibrator (not shown) of the electronic device 100.

The warning may include a prompt or other visual cue to delete the captured image because the captured image is likely to be blurry. At 314, the electronic device 100 will delete the captured image in response to corresponding input, such as activation of a delete button (not shown) which may be a mechanical button or an onscreen button. For example, the user may press a delete button in response to display of a visual notification that the captured image is likely to be blurry.

The preview image, while useful, is typically a small thumbnail image which is not suitable for assessing motion blur. Accordingly, users must conventionally open and review a full screen version of the captured image on the display 112 to determine whether the image is blurry. Even the full screen version of the captured image is insufficient to determine whether the image is blurry when the level of motion blur is low but nevertheless perceptive when viewed on a large display device such as a computer monitor or television. Advantageously, the warning improves the composing of a captured image by notifying the user that a captured image that is likely to be blurry. The user can decide to capture another image without having to open and review an image that will be known to be blurry. Not only is this time consuming, but is often insufficient to detect lower but nevertheless unacceptable levels of motion blur, and introduces the possibility that the scene being captures changes during the review process so that the opportunity to capture a particular subject is forever lost. Even more advantageously, the user can delete a captured image from memory without having to open and review an image that is likely to be blurry.

In alternate embodiments, the captured image may be deleted automatically, without receiving input, when it is determined that the sensed motion is greater than the threshold level of motion. In some alternate embodiments, the captured image may be deleted automatically, without providing, a warning when it is determined that the sensed motion is greater than the threshold level of motion.

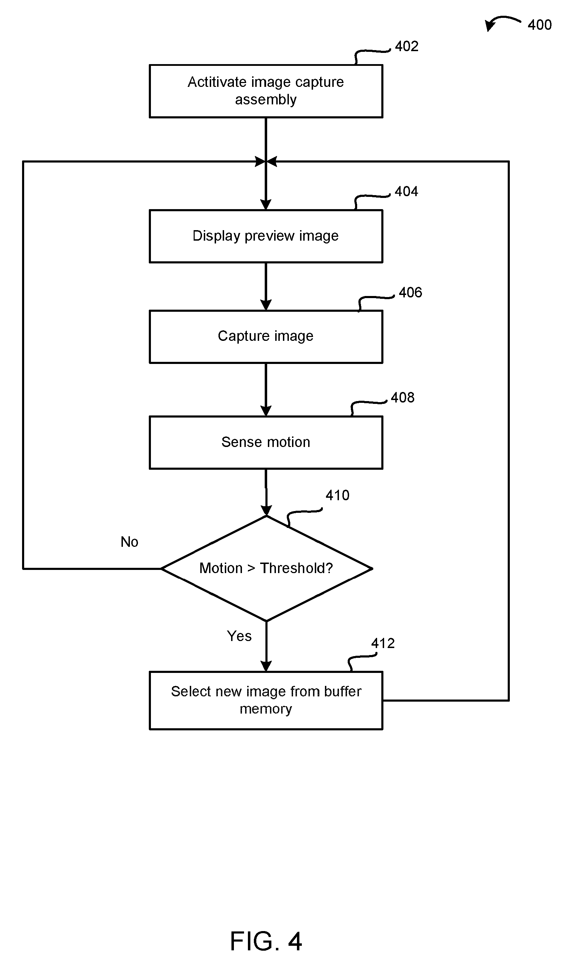

Figure 4 is a flowchart of a method 400 for motion enhanced image capture in accordance with another example embodiment of the present disclosure. The method 400 may be carried out, at least in part, by firmware or software such as the camera application 181, executed by the processor 102 and/or image processor 202. Coding of software for carrying out such a method 400 is within the scope of a person of ordinary skill in the art provided the present disclosure. The method 400 may contain additional or fewer processes than shown and/or described, and may be performed in a different order. Computer-readable code executable by at least one processor 102 and/or image processor 202 to perform the method 400 may be stored in a computer-readable medium such as the persistent memory 120.

At 402, the image capture assembly 200 is activated, for example, by engaging a camera mode of the electronic device 100. The camera mode can be activated by a camera button or a corresponding menu option displayed on the display 112. The zoom lens 204 is set to a default position which is typically a wide angle position.

At 404, the image sensor 208 captures images which are output to the display 112 to provide an image preview mode which enables the user to compose the images to be captured based on a real-time preview image. As part of the composing, the user may activate zoom buttons to set a desired field of view. The digital captured image signal C provides captured images for preview on the display 112 and provides captured images for the image processor 202 to perform autofocus calculations.

At 406, the capture button is activated and the image currently being displayed in the real-time preview image is selected for "permanent" capture and storage in persistent memory. As part of selecting the captured image, the image processor 202 selects the image from the buffer memory 212 which corresponds to the real-time image displayed on the display 112 when the capture button was activated.

At 408, the motion sensor 180 senses motion of the electronic device 100 and stores the motion data temporarily in memory, for example, in RAM 108. The electronic device 100, via the processor 102 and/or image processor 202, analyzes the sensed motion, the current f-number of the zoom lens 204 and optionally the exposure time based on the amount of available light provided by the exposure detector 222. While shown as a separate functional step, the motion sensor 180 senses motion during the image capture of 406.

At 410, the electronic device 100, via the processor 102 and/or image processor 202, determines whether the sensed motion is greater than a threshold level of motion as described above in connection with Figure 3.

At 412, a new image is selected from the buffer memory 212 when it is determined that the sensed motion is greater than the threshold level of motion. In at least some embodiments, the new image is selected when it is determined that the captured image is predicted to have a level of motion blur which is greater than the threshold level of motion blur. The image processor 202 selects a new image from the sequence of images acquired from the digital captured image signal B of the ASP 210 and stored in the buffer memory 212. When in a zero shutter lag mode, images are continuously sampled and stored to the buffer memory 212 as described above. The new image could be an image captured before the selected captured image was captured, or after the selected captured image was captured in embodiments in which the buffer memory 212 continues to be populated with new images after the capture button is activated and before the processing of the selected image is complete.

The image processor 202 selects a new image in accordance with the sensed motion associated with the images in the buffer memory 212. The image processor 202 may select as the new image an image in the buffer memory 212 with the least amount of sensed motion when, for example, the buffer memory 212 is relatively small (e.g., 5 or 10 images or less). Alternatively, the image processor 202 may select as the new image an image in the buffer memory 212 which is closest in sequence (e.g., closest in chronological order) to the selected image and which is associated with a measure of sensed motion which is less than the threshold level of motion as determined from the stored motion data from 406.

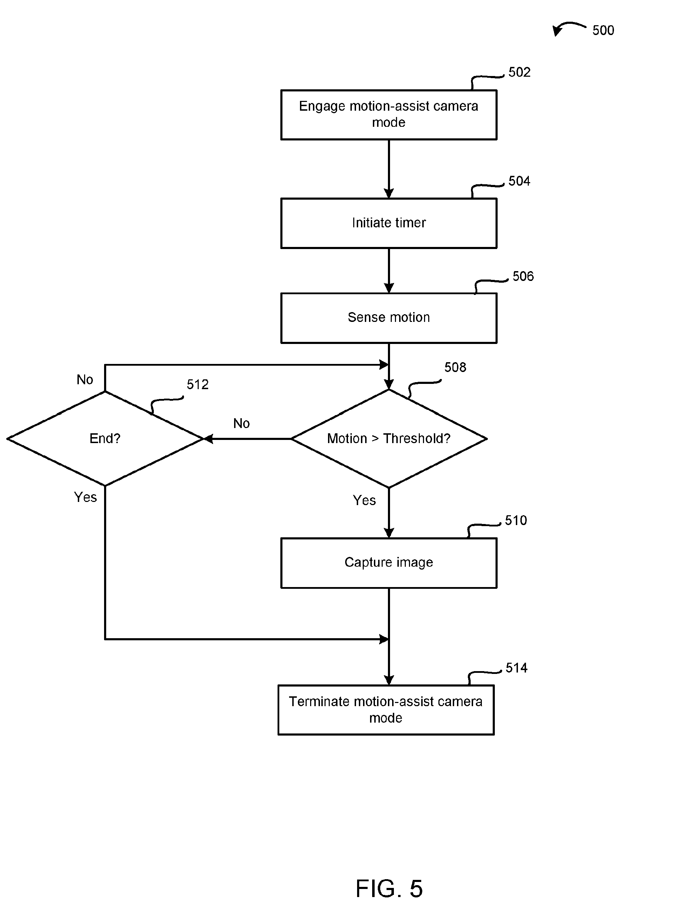

Figure 5 is a flowchart of a method 500 for motion enhanced image capture in accordance with a further example embodiment of the present disclosure. The method 500 may be carried out, at least in part, by firmware or software such as the camera application 181, executed by the processor 102 and/or image processor 202. Coding of software for carrying out such a method 500 is within the scope of a person of ordinary skill in the art provided the present disclosure. The method 500 may contain additional or fewer processes than shown and/or described, and may be performed in a different order. Computer-readable code executable by at least one processor 102 and/or image processor 202 to perform the method 500 may be stored in a computer-readable medium such as the persistent memory 120.

At 502, a motion-assisted camera mode of the electronic device 100 is engaged. The motion-assisted camera mode is typically activated by a corresponding menu option after entering the primary camera mode. As mentioned previously, the primary camera mode can be activated by a camera button or a corresponding menu option displayed on the display 112. The zoom lens 204 is set to a default position which is typically a wide angle position.

At 504, a first timer is initiated. The first timer may be initiated in response to activation of the capture button when in the motion-assisted camera mode, or activating a corresponding menu option. The first timer is a countdown timer which counts down from a set duration, such as 10 seconds. The duration may be configurable in some embodiments. The first timer allows the device user to set the scene of the image to be captured in the duration of the first timer, for example, by allowing the device user to arrange or compose the subject(s) of the image to be captured. If a tripod or other stand is used, the first timer allows the device user and other persons in the scene of the image to be captured to position themselves in the field of view of the zoom lens 204. Alternatively, in other embodiments the first timer may count up to a set duration, such as 10 seconds, rather than being a countdown timer.

At 506, when the first timer expires the motion sensor 180 starts to sense motion of the electronic device 100. In other embodiments, the first timer may be omitted and the motion sensor 180 starts to sense motion in response to engaging of the motion-assisted camera mode in 502. The motion data may be stored temporarily in memory, for example, in RAM 108. In some embodiments, the zero shutter lag mode is also engaged. In this mode, the image sensor 208 captures images continuously and stores the captures images in the buffer memory 212, as described above. The captured images are optionally output to the display 112 to provide a real-time image preview mode. The digital captured image signal C provides captured images for preview on the display 112 and provides captured images for the image processor 202 to perform autofocus calculations.

At 508, the electronic device 100, via the processor 102 and/or image processor 202, determines whether the sensed motion is less than a threshold level of motion as described above in connection with Figure 3.

At 510, an image in the buffer memory 212 is selected for "permanent" capture and storage in persistent memory when it is determined that the sensed motion is less than the threshold level of motion. The threshold of level of motion may be set to correspond to no motion or substantially no motion to eliminate or substantially eliminate motion blur in the captured image. The image selected for capture may be the most recent image in the buffer memory 212 or the image currently

being displayed in the real-time preview image when a preview image is displayed on the display 112, which may or may not be the same. For latency reasons, the most recent image in the buffer memory 212 may not be the image currently being displayed in the real-time preview image. For computational efficiency, the most recent image in the buffer memory 212 may be selected for °°permanent" capture. Alternatively, the real-time image displayed on the display 112 is synchronized with the images stored in the buffer memory 212 such that, when the capture button is activated, the image in the buffer memory 212 which corresponds to the real-time image displayed on the display 112 when the capture button was activated is selected from the buffer memory 212. The motion sensor 180 continues to sense motion of the electronic device 100 until a terminating event occurs (decision block 512). At 514, the motion-assisted camera mode terminates when a terminating event occurs.

The terminating event may be that the sensed motion is less than the threshold level of motion and an image is permanently captured or input cancelling the motion-assisted camera mode is received, typically in the form of activating a corresponding menu option. In some embodiments, a second timer is initiated when the motion sensor 180 starts to sense motion of the electronic device 100. The second timer is a countdown timer which counts down from a set duration, such as 10 seconds. The duration may be configurable in some embodiments. The expiry of the second timer provides another terminating event which cancels the motion-assisted camera mode. Alternatively, in other embodiments the second timer may count up to a set duration, such as 10 seconds, rather than being a countdown timer.

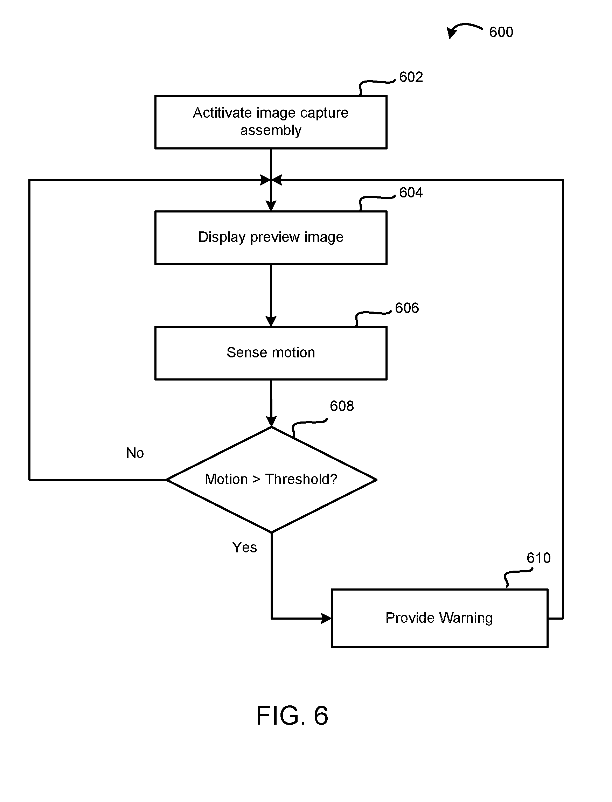

Figure 6 is a flowchart of a method 600 for motion enhanced image capture in accordance with a further example embodiment of the present disclosure. The method 600 may be carried out, at least in part, by firmware or software such as the camera application 181, executed by the processor 102 and/or image processor 202. Coding of software for carrying out such a method 600 is within the scope of a person of ordinary skill in the art provided the present disclosure. The method 600 may contain additional or fewer processes than shown and/or described, and may be performed in a different order. Computer-readable code executable by at least one processor 102 and/or image processor 202 to perform the method 600 may be stored in a computer-readable medium such as the persistent memory 120.

At 602, the image capture assembly 200 is activated, for example, by engaging a camera mode of the electronic device 100. The camera mode can be activated by a camera button or a corresponding menu option displayed on the display 112. The zoom lens 204 is set to a default position which is typically a wide angle position.

At 604, the image sensor 208 captures images which are output to the display 112 to provide an image preview mode which enables the user to compose the images to be captured based on a real-time preview image. As part of the composing, the user may activate zoom buttons to set a desired field of view. The digital captured image signal C provides captured images for preview on the display 112 and provides captured images for the image processor 202 to perform autofocus calculations.

At 606, the motion sensor 180 senses motion of the electronic device 100 and stores the motion data temporarily in memory, for example, in RAM 108. The electronic device 100, via the processor 102 and/or image processor 202, analyzes the sensed motion, the current f-number of the zoom lens 204 and optionally the exposure time based on the amount of available light provided by the exposure detector 222. While shown as a separate functional step, the motion sensor 180 senses motion during the image capture of 604.

At 608, the electronic device 100, via the processor 102 and/or image processor 202, determines whether the sensed motion is greater than a threshold level of motion as described above in connection with Figure 3.

At 610, a warning is provided when it is determined that the sensed motion is greater than the threshold level of motion. In some embodiments, the warning is provided when it is determined that the image being captured is predicted to have a level of motion blur which is greater than a threshold level of motion blur. The warning is typically a visual notification displayed on the display 112, for example, an icon or other pictorial representation which overlays (e.g., is superimposed upon) the real-time preview image displayed on the display 112 or an electronic viewfinder device. Alternatively, the visual notification may be a message which overlays the real-time preview image displayed on the display 112 or an electronic viewfinder device. Alternatively, the warning may be an audible notification such as a tone, beep or pre-recorded message which is reproduced using the speaker 156, or a physical notification such as a vibration caused by a vibrator (not shown) of the electronic device 100.

Advantageously, the warning improves the composing of a captured image by notifying the user that an image is likely to be blurry due to an analysis of the sensed motion and the f-number of the zoom lens 204 and optionally exposure time. This saves the user from a need to review an image that will be known to be blurry. This provides the user with information that if an image were to be captured at the present time will likely result in an unsatisfactory level of motion blur. This allows the user to wait until the amount of motion decreases by a sufficient amount such that the level of motion blur, if any, is below the threshold level of motion blur. This will be indicated to the user by the termination of the warning (e.g., the hiding or removal of the visual notification or cessation of the audible or physical notification).

While not shown, if the capture button is activated during the warning, the image currently being displayed in the real-time preview image is selected for "permanent" capture and storage in persistent memory despite the warning.

The methods 300, 400, 500 and 600 are particularly useful for reducing motion blur in conditions of intense motion, such as during moments of turbulence when the electronic device 100 is travelling in a motor vehicle, boat, airplane, helicopter or other vehicle, or in low light conditions when even minor movements of the electronic device 100 may result in motion blur in the captured image.

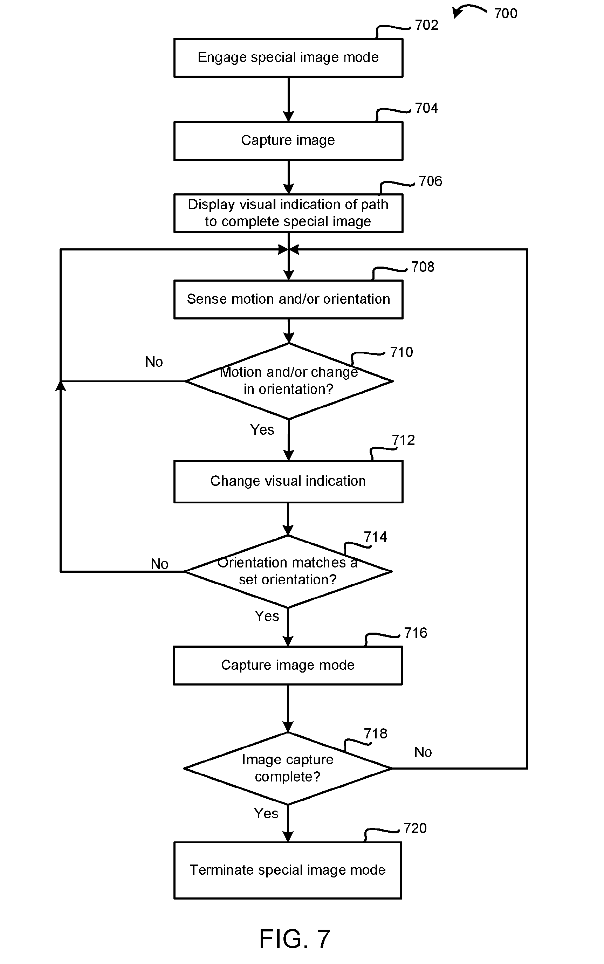

Figure 7 is a flowchart of a method 700 for motion enhanced image capture in accordance with a further example embodiment of the present disclosure. The method 700 may be carried out, at least in part, by firmware or software such as the camera application 181, executed by the processor 102 and/or image processor 202. Coding of software for carrying out such a method 700 is within the scope of a person of ordinary skill in the art provided the present disclosure. The method 700 may contain additional or fewer processes than shown and/or described, and may be performed in a different order. Computer-readable code executable by at least one processor 102 and/or image processor 202 to perform the method 700 may be stored in a computer-readable medium such as the persistent memory 120.

At 702, a special image mode of the electronic device 100 is engaged. The special image camera mode is typically activated by a corresponding menu option after entering the primary camera mode. The special image mode is used to create a composite image. The composite image is formed by combining two or more images captured by the image sensor 208. Examples of a composite image include wide or spherical panoramic image or other oversized image which is larger than the image sensor 208. The size and/or aspect ratio of the image may be selectable or configurable by the user before or after the special image mode of the electronic device 100 is engaged.

As mentioned previously, the primary camera mode can be activated by a camera button or a corresponding menu option displayed on the display 112. The zoom lens 204 is set to a default position which is typically a wide angle position. A real-time preview is provided in at least some embodiments. As part of the real-time preview, the image sensor 208 captures images which are output to the display 112 to provide an image preview mode which enables the user to compose the images to be captured based on a real-time preview image. As part of the composing, the user may activate zoom buttons to set a desired field of view. The digital captured image signal C provides captured images for preview on the display 112 and provides captured images for the image processor 202 to perform autofocus calculations.

At 704, the capture button is activated and an initial image is captured. When a real-time preview is provided, the image currently being displayed in the real-time preview image is selected and stored in memory, typically persistent memory. As part of selecting the captured image when a real-time preview image is provided, the image processor 202 selects the image from the buffer memory 212 which corresponds to the real-time image displayed on the display 112 when the capture button was activated. The orientation of the electronic device 100 when the image is captured is stored, at least temporarily in memory, for example, in RAM 108.

At 706, a visual indication of a path (e.g., gestural path) for completing the composite (e.g., panoramic) image composition is displayed on the display 112. The path represents a plurality of movements of the electronic device 100 to be performed by a user to complete the image composition based on the initial image captured in 704. Each movement causes the electronic device 100 to be positioned, at least temporarily, in one or more set device orientations at which additional images are captured for later combination to form the composite image. The set device orientations are determined by the image processor 202, or main processor 102, based on the initial image and the composite image size and/or aspect ratio.

The movements may be, for example, tilting or rotating the electronic device 100 up, down, left or right. A tilt up is caused when a top of the electronic device 100 is tilted upwards towards the user and a bottom of the electronic device 100 is tilted downwards. A tilt down is caused when the top of the electronic device 100 is tilted downwards away from the user and the bottom of the electronic device 100 is tilted upwards. Depending on the particular visual indication which is provided, the movements may be performed in any order or must be performed in a particular order. The order of the movements does not matter for image composition purposes; however, the performance of the movements in a particular order may facilitate the image composition process, particularly when the movements are selected to reproduce a known and/or natural flowing motion.

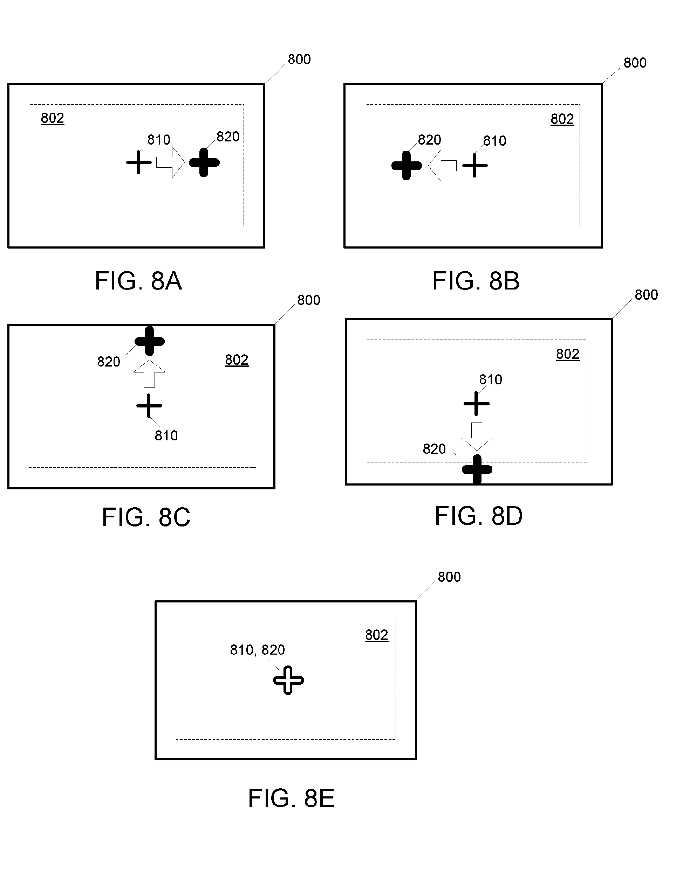

The visual indication of the path for completing the image composition may take one of several forms. Figures 8A to 8E illustrate one example of a user interface screen 800 in which the visual indication of the path completing the image composition is superimposed (e.g., overlayed) over the real-time preview image 802. A reticule 810 which overlays the real-time preview image 802. The reticule 810 has a set position within the display area of the display 112 and typically indicates the centre of the field of view captured by the image sensor 208. The reticule 810 may also indicate the portion of the scene being captured which is used for autofocus calculations. In the shown example, the reticule 810 takes the appearance of cross-hairs although other types of reticules may be used in other embodiments

The visual indication of the path comprises a target 820 which overlays the real-time preview image 802. The target 820 has a first set position within the scene (or field of view of the image sensor 208) based on the device orientation when the initial image of the composite image was captured in 704. The target 820 represents a first device position/orientation in the path to complete the image composition and an end point of one of the first movement of the path. The end point typically corresponds to a set device orientation of the first movement at which a captured image will be used to complete the image composition. Alternatively, the one or more set device orientations of the first movement may occur during the movement and the end point is set to ensure that the electronic device 100 moves through the one or more set device orientations of the first movement.

Changes in the orientation of the electronic device 100 cause a position of the reticule 810 to move relative to the target 820. An arrow is used in Figures 8A to 8D to show the direction of movement of the reticule 810. The arrow may or may not form part of the user interface screen 800 depending on the embodiment. In yet other embodiments, the arrows may be displayed and the target 820, though notionally representative of the various movements required to complete the composite image composition, is not shown.

Tilting the electronic device 100 in a particular direction causes corresponding movement of the reticule in the particular direction of the tilting. For example, tilting the electronic device 100 down causes the reticule 810 to move down, tilting the electronic device 100 upwards causes the reticule 810 to move up, tilting the electronic device 100 right causes the reticule 810 to move right, and tilting the electronic device 100 left causes the reticule 810 to move left. In other examples, the directionality may be reversed so that tilting the electronic device 100 in a particular direction causes corresponding movement of the reticule in a direction opposite to the particular direction of the tilting. It will be appreciated that the path provided by the user interface screen 800 may be performed in any order to move the reticule 810 through the target 820 in its various positions.

In Figure 8A, the target 820 is located towards a right of the user interface screen 800 right of an initial position of reticule 810. Tilting the electronic device 100 right causes the reticule to move right towards the target 820. In Figure 8B, the target 820 is located towards a left of the user interface screen 800 left of an initial position of reticule 810. Tilting the electronic device 100 left causes the reticule to move left towards the target 820. In Figure 8C, the target 820 is located towards a top of the user interface screen 800 above an initial position of reticule 810. Tilting the electronic device 100 up causes the reticule to move up towards the target 820. In Figure 8D, the target 820 is located towards a bottom of the user interface screen 800 below an initial position of reticule 810. Tilting the electronic device 100 downwards causes the reticule to move down towards the target 820.

At 708, the motion sensor 180 senses motion of the electronic device 100, the orientation sensor 182 senses device orientation, or both. The electronic device 100 stores the motion data and/or orientation data temporarily in memory, for example, in RAM 108. The electronic device 100, via the processor 102 and/or image processor 202, analyzes the sensed motion and/or orientation.

At 710, the electronic device 100, via the processor 102, determines whether a notable movement and/or change in device orientation have been sensed. A notable movement occurs when sensed motion is greater than a threshold level of motion. A notable change in device orientation occurs when sensed change in device orientation is greater than a threshold level.

At 712, the visual indication is changed in response to sensing a notable movement and/or change in device orientation of the electronic device 100. In the described example, the reticule 810 moves with the change in the field of view. The target 820 is fixed within the scene (field of view of the image sensor 208). The reticle 810 moves relative to the target.

When reticule 810 reaches the target 820 (i.e., when the position of the reticule 810 matches a position of the target 820) as shown in Figure 8E, the appearance of the reticule 810 and/or target 820 may optionally change to indicate that part of the path has been completed. For example, the colour and/or size of the reticule 810 and/or target 820 may change. When reticule 810 reaches the target 820, the target 820 is relocated at a new set position within the scene (or field of view of the image sensor 208) based on the device orientation when the initial image of the composite image was captured in 704. The target 820 represents the next device position/orientation in the path to complete the special image composition.

In some embodiments, images are continually added to the buffer memory 212 until the image composition is complete. In other embodiments, images are only added to the buffer memory 212 when the electronic device 100 is positioned in at one of the set device orientations at which a captured image will be used to complete the image composition.

At 714, the processor 102 determines whether the device orientation corresponds to one of the one or more set device orientations at which a captured image will be used to complete the image composition. At 716, when the device orientation corresponds to one of the one or more set device orientations (as optionally indicated to the device user by a change in the appearance of the reticule 810 and/or target 820), an image in the buffer memory 212 is selected and stored in memory, typically persistent memory. This may be the most recent image in the buffer memory 212 or the image currently being displayed in the real-time preview image when a preview image is displayed on the display 112, which may or may not be the same. For latency reasons, the most recent image in the buffer memory 212 may not be the image currently being displayed in the real-time preview image. For computational efficiency, the most recent image in the buffer memory 212 may be selected for "permanent" capture. Alternatively, the real-time image displayed on the display 112 is synchronized with the images stored in the buffer memory 212 such that, when the capture button is activated, the image in the buffer memory 212 which corresponds to the real-time image displayed on the display 112 when the capture button was activated is selected from the buffer memory 212.

The motion sensor 180 and orientation sensor 182 continues to sense motion and orientation of the electronic device 100 until the image capture for the composition is complete (decision block 718). At 720, the special images mode terminates when the image capture composition is complete. In some embodiments, before the special images mode is terminated, the selected images are combined to form a composite image by the image processor 202. Methods for combining images to form a composite image are outside the scope of the present disclosure and will not be described in detail herein. Methods for combining images suitable for use by the image processor 202 are well known in the art and will be readily known to the skilled person. Alternatively, the selected images may be transferred to a host computer or accessed by the host computer, which combined the selected images to form a composite image, for example, using specialized software.

The terminating event may be that the sensed motion is less than the threshold level of motion and an image is permanently captured or input cancelling the motion-assisted camera mode is received, typically in the form of activating a corresponding menu option. In some embodiments, a second timer is initiated when the motion sensor 180 starts to sense motion of the electronic device 100. The second timer is a countdown timer which counts down from a set duration, such as 10 seconds. The duration may be configurable in some embodiments. The expiry of the second timer provides another terminating event which cancels the motion-assisted camera mode. Alternatively, in other embodiments the second timer may count up to a set duration, such as 10 seconds, rather than being a countdown timer.

The steps and/or operations in the flowcharts and drawings described herein are for purposes of example only. There may be many variations to these steps and/or operations without departing from the teachings of the present disclosure. For instance, the steps may be performed in a differing order, or steps may be added, deleted, or modified.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description.

## Claims

1. A method for motion enhanced image capture on a portable electronic device, the method comprising:
storing an image captured by an image sensor of the portable electronic device in a buffer memory;
sensing motion of the portable electronic device;
selecting an image for capture using the image sensor in response to input;
selecting a new image from the image buffer when the sensed motion is greater than a threshold level of motion.

2. The method of claim 1, wherein the new image is an image in the buffer memory with a least amount of sensed motion.

3. The method of claim 1, wherein the new image is an image in the buffer memory which is closest in chronological order to the selected image and is associated with a measure of sensed motion which is less than the threshold level of motion.

4. The method of any one of claims 1 to 3, wherein the storing an image captured by an image sensor includes:
displaying a real-time image captured by an image sensor;
storing the real-time image in a buffer memory.

5. The method of any one of claims 1 to 4, further comprising storing the new image in persistent memory.

6. The method of any one of claims 1 to 5, wherein the new image is selected when the new image is predicted to have a level of motion blur which is greater than a threshold level of motion blur based on a magnitude of the sensed motion when the initially selected image was captured and an f-number at which the initially selected image was captured.

7. The method of any one of claims 1 to 5, wherein the new image is selected when the new image is predicted to have a level of motion blur which is greater than a threshold level of motion blur based on a magnitude of the sensed motion when the initially selected image was captured, an f-number at which the initially selected image was captured, and an exposure time at which the initially selected image was captured.

8. A computer program product comprising a computer readable medium having stored thereon computer program instructions for implementing a method for motion enhanced image capture on a portable electronic device, the computer executable instructions comprising:
computer executable instructions for sensing motion of the portable electronic device;
computer executable instructions for capturing an image using an image sensor of the portable electronic when the sensed motion is less than a threshold level of motion;
computer executable instructions for storing the captured image in persistent memory.

9. The computer program product of claim 8, wherein the computer executable instructions specify that the image is captured when the image is predicted to have a level of motion blur which is less than a threshold level of motion blur based on a magnitude of the sensed motion when the initially selected image was captured and an f-number at which the initially selected image was captured.

10. The computer program product of claim 8, wherein the computer executable instructions specify that the image is captured when the image is predicted to have a level of motion blur which is less than a threshold level of motion blur based on a magnitude of the sensed motion when the initially selected image was captured, an f-number at which the initially selected image was captured, and an exposure time at which the initially selected image was captured.

11. An electronic device, comprising:
a processor;
a motion sensor coupled to the processor; and
an image sensor coupled to the processor;
wherein the processor is configured to: capture an image captured by an image sensor of the portable electronic device; sense motion of the portable electronic device; provide a warning that the image is likely burry when the sensed motion is greater than a threshold level of motion.

12. The electronic device of claim 11, wherein the warning is a visual notification displayed on a display of the portable electronic device.

13. The electronic device of claim 12, wherein the visual notification overlays a post-capture preview image displayed on the display, wherein the post-capture preview image as a thumbnail image of the captured image.

14. The electronic device of any one of claims 11 to 13, wherein the warning includes a prompt to delete the captured image.

15. The electronic device of claim 14, wherein the processor is further configured to delete the captured image in response to input received during the display of the warning.
